# EUROPEAN PATENT APPLICATION

(11) **EP 4 596 371 A1**
(43) Date of publication of application: **06.08.2025**
(21) Application number: 24154893.2
(22) Date of filing: 31.01.2024
(51) Int. Cl.: B62D 5/09, B62D 5/00, B62D 5/093

(54) **STEER BY WIRE SYSTEM**

(71) Applicant: Danfoss Power Solutions ApS, 6430 Nordborg (DK)
(72) Inventor: Rudolph, Tom, 6430 Nordborg (DK); Petersen, Morten Hoeck, 6430 Nordborg (DK)
(74) Representative: Keil & Schaafhausen Patentanwälte PartGmbB

(57) **Abstract**

The present invention relates to steer by wire system (1) for steering a vehicle with a steering mechanics (8), the steer by wire system (1) having a steering input device (2) and a first actuating arrangement (5), wherein the first actuating arrangement (5) comprises a first electric motor (5a), which is in connection to the steering input device (2), and a first hydraulic unit (5d), which is operatively coupled to the first electric motor (5a), wherein the first hydraulic unit (5) is configured to be fluidly connected to the steering mechanics (8).

The objective of the present invention is to provide a steer by wire system (1) having a large range of steering forces.

This objective is solved by a steer by wire system (1) comprising a second actuating arrangement (6) being structured and coupled analogously to the first actuating arrangement (5).

## Description

The present invention relates to steer by wire system for steering a vehicle with a steering mechanics, the steer by wire system having a steering input device and a first actuating arrangement, wherein the first actuating arrangement comprises a first electric motor, which is in connection to the steering input device, and a first hydraulic unit, which is operatively coupled to the first electric motor, wherein the first hydraulic unit is configured to be fluidly connected to the steering mechanics.

The vehicle is for example a construction vehicle, an agriculture vehicle, a mining vehicle or alike. Even though the preferred embodiments are off highway the present system could also be used On-highway for example in trucks or buses. Such a vehicle is steered via the steering input device comprising e.g. a steering wheel and/or a joystick or another input device, alternatively the vehicle is steered fully automatic. The steering input device detects a steering input of a driver and determines based on the steering input a steering command and provides it to the actuating arrangement. The actuating arrangement, comprising the electric motor and the hydraulic unit, receives the steering command and controls the electric motor to drive the hydraulic unit based on the steering command. The hydraulic unit provides a hydraulic fluid to the steering mechanics, comprising at least one hydraulic cylinder, to steer the vehicle, in particular its steered wheels.

For example, the electric motor drives the hydraulic unit, wherein the hydraulic unit is a hydraulic pump or a hydraulic steering unit. In case the hydraulic unit is a hydraulic steering unit, a hydraulic fluid is provided by an external pressure source, e.g. a system pump, such that the electric motor acts as an actuating means. The steering assembly, in particular the at least one hydraulic cylinder, is provided with hydraulic pressure from the hydraulic steering unit. The hydraulic steering unit comprises a rotary valve and a rotary meter driven by one common drive shaft by the electric motor. In case the hydraulic unit is a pump, the electric motor is provided with electricity and drives the hydraulic pump, which generates hydraulic pressure to drive the steering mechanics, respectively its hydraulic cylinder(s).

The objective of the present invention is to provide a steer by wire system having a large range of steering forces.

This objective is solved by a steering system according to claim 1.

The steer by wire system as described in the outset comprises a second actuating arrangement, wherein the second actuating arrangement comprises a second electric motor, which is in connection to the steering input device, and a second hydraulic unit, which is operatively coupled to the second electric motor, wherein the second hydraulic unit is configured to be fluidly connected to the steering mechanics. Both hydraulic units of the first and second actuating arrangements are fluidly connected to each hydraulic cylinder of the steering mechanics. If one actuating arrangement fails, another actuating arrangement is still able to perform steering operations, such that such a steer by wire is fail operational. Therefore, the steer by wire system is at least partly redundant, allowing to safely park the vehicle in case one actuating arrangement fails.

In one embodiment, the steer by wire system comprises at least one vehicle speed sensor and/or at least one wheel angle sensor. The vehicle speed sensor is configured to provide information on the speed of the vehicle. The wheel angle sensor is configured to provide information on an angle of at least one steering wheel relatively to a normal position, e.g. a position of the wheels when the vehicle is travelling straight ahead. By using the information provided by the wheel angle sensor and/or the vehicle speed sensor a sensitivity of the steer by wire system can be adapted. E.g. when the vehicle is moving slowly, a steering command provided to the steering input device results in a greater steering angle, compared to a steering command at a higher vehicle speed. This allows a good user friendliness.

In one embodiment, the steering input device comprises two steering input sensors, wherein both steering input sensors are in data connection with the first and the second electric motor. However, more steering input sensors can be provided, wherein all sensors are in data connection to each electric motor. Each sensor is connected to a respective controller of the electric motor. By comparing signals provided by the different steering input sensors which each other, tolerances of each steering input sensor can be taken into account, allowing a precise steering of the vehicle. By comparing the sensor output from the sensors it is also possible to determine if one of the sensors is faulty.

In one embodiment, the steering input device comprises a feed-back module. Such a steering feed-back module provides tactile and sensory information to a driver through the steering input device, in particular through a handle of the steering input device, e.g. a steering wheel. Thus, the driver, or operator, feels e.g. when the maximum steering angle is reached and/or when the center position is reached. In a preferred embodiment the feedback module is in the form of a electric motor and the same motor is also used as steering input sensor.

In one embodiment, the steering input device is fail operational. To do so, the steering input device comprises redundant sensors and/or data connections to other steer by wire system components, e.g. the first and second actuating arrangement. By providing a fail operational steering input device to the steer by wire system, the steer by wire system is operational even if at least one component of the steering input device fails. The fail operational could be in the form of a electrical motor with 2 sets of windings, so that it is still possible to use the steering input device if the first pair of windings fails.

In one embodiment, each electric motor is connected to a respective controller, wherein the controllers are connected to at least one sensor assembly, in particular to at least one vehicle speed sensor, at least one wheel angle sensor and/or two steering input sensors. Each controller is configured to control the electric motor based on information provided by the at least one sensor assembly. In addition, information provided by other sensors, e.g. steering speed sensors, rotation speed sensor of the electric motor, etc. can be used as well. This allows a precise steering. In a preferred embodiment the electric motor and the at least one controller is integrated in the same housing.

In one embodiment, at least one of the first or second actuating arrangements comprises a transmission unit arranged between the respective electric motor and the corresponding hydraulic unit. The transmission unit couples the corresponding electric motor with a corresponding hydraulic unit. In the other actuating arrangement, e.g. an output element of the first electric motor drives an input element of the first hydraulic unit, wherein the input element of the first hydraulic unit and the output element of the first electric motor directly interact with each other. Alternatively, both actuating arrangements comprise each a transmission unit, wherein the transmission units differ in their transmission (gear) ratio. The transmission unit decreases or increases a torque provided by the electric motor to the hydraulic pump. By increasing the torque, a speed is reduced and vice versa. A higher torque results in a higher steering force and a lower steering speed, while a higher speed results in a faster steering speed and a lower steering force.

In one embodiment, the second actuation arrangement is a backup for the first actuating arrangement. In this embodiment, the second actuating arrangement is only in operation if the first actuating arrangement fails. This results in a low wear of the second actuating arrangement.

In one embodiment, the first actuating arrangement is configured to work in a first condition, the second actuating arrangement is configured to work in a second condition and/or the first and the second actuating arrangements are configured to work together in a third condition. For example, the first condition is when little steering speeds are needed to steer the vehicle. In the second condition, medium high steering speeds are required, while in the third condition high steering speeds are required to steer the vehicle. Alternatively, in other words, the first and the second actuating arrangements operate alternatingly, wherein the first actuation arrangement operates at a first time period, while the second actuating arrangement operates at a second time period. In another embodiment, the first and the second actuating arrangement operate simultaneously at all times. In another example, the first actuating arrangement operates in a first condition, wherein the second actuating arrangement supports the first actuating arrangement, when the condition changes, e.g. a higher steering speed is required. For example, the first and the second actuating arrangements are different to each other, wherein the electric motor of the second actuating arrangement provides a higher torque than the electric motor of the first actuating arrangement. Alternatively, the fist and the second actuating arrangements are identical. This results in a high flexibility of adapting the steer by wire system to different kinds of vehicles. When both actuating arrangements are actuated simultaneously this ensures that nothings gets sucked because the mechanically system is activated each time. In this way both strings could supply 50 % of the total amount of fluid needed for steering.

In one embodiment, a GPS-unit is in data connection with the first and the second actuating arrangements. Preferably, the GPS-unit is in data connection with the controllers of the electric motors of each actuating arrangement. This allows the vehicle to be steered fully automatically based on information provided by the GPS-unit. Because the GPS signal is received on both actuating units this also secures a redundant signal should one of the units fail.

The invention is described below with reference to a preferred embodiment in conjunction with the drawing. Herein it is schematically shown:
- Fig. 1: A first embodiment of the steer by wire system;
- Fig. 2: a second embodiment of the steer by wire system; and
- Fig. 3: a third embodiment of the steer by wire system.

In the following, identical and similar elements share the same reference numbers.

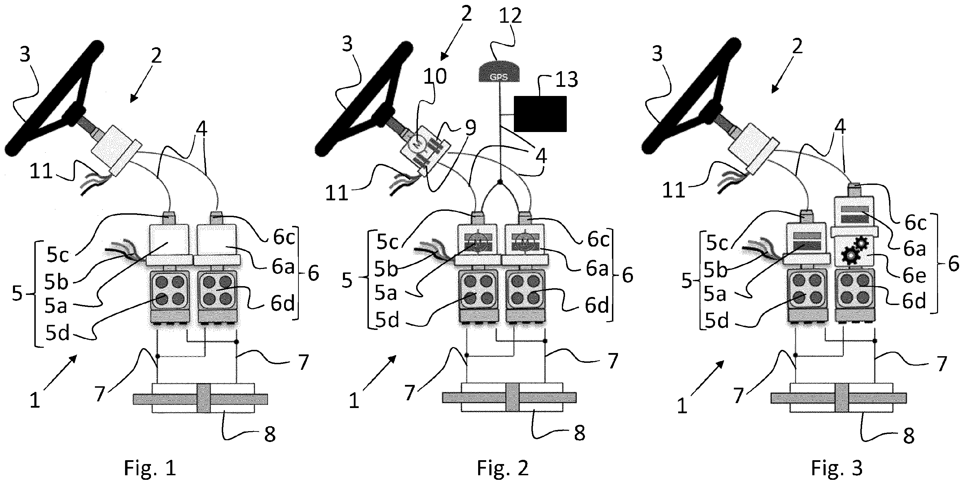

Fig. 1 depicts a first embodiment of a steer by wire system 1 having a steering input device 2 with a steering wheel 3. The steering input device 2 is in data connection 4 with a first actuating arrangement 5 and a second actuating arrangement 6. Both actuating arrangements 5, 6 are fluidly connected via hydraulic lines 7 to a hydraulic cylinder 8 of a not further depicted steering mechanism.

The steering input device 2 comprises steering input sensors 9 (see Fig. 2, not shown in Figs. 1 and 3), which could be for example a torque sensor and/or a position sensor. The steering input device 2 may comprise a feed-back module 10, see Fig. 2. The steering input device 2 is connected to a not depicted power supply via first an input power supply 11. The steering input device could also contain a gear arranged between for example the steering wheel and the electric motor. The electric motors could be connected to the steering units through a spline connection which typically is the way to connect a steering wheel to a hydraulic steering unit or it could be a special connection designed to minimize play between the two units. The electric motor and controller could also be integrated in the same housing as the steering unit.

The first actuating arrangement 5 comprises a first electric motor 5a, a first power supply 5b, a first controller 5c and a first hydraulic unit 5d. The first controller 5c is in data connection with the steering input device 2. The first hydraulic unit 5d is connected to the hydraulic cylinder 8 via the hydraulic lines 7. Analogous to the first actuating arrangement 5, the second actuating arrangement 6 comprises a second electric motor 6a, a (not depicted) second power supply, a second controller 6c and a hydraulic unit 6d. The second controller 6c is in data connection with the steering input device 2. The second hydraulic unit 6d is connected via hydraulic lines 7 to the hydraulic cylinder 8. The steering input sensors 9 are in data connection with the first and second electric motor 5a,6a, respectively their controllers 5c,6c. In addition, the second actuating arrangement 6 is structured in the same way as the first actuating arrangement 5. The two controllers 5c and 6c could also be connected to each other, so that they can exchange information which for example could be used to indicate a faulty sensor in the steering input device be comparing the received information from the sensor in the steering input device.

The hydraulic units are receiving fluid from a pump (not shown) and returning fluid to a tank (also not shown).

Fig. 2 depicts a second embodiment of the steer by wire system 1 having all features of the first embodiment. The steer by wire system 1 comprises the steering input device 2 having the steering wheel 3, two steering input sensors 9, a feed-back module 10 and is connected to a power supply by the input power supply 11. The steering input device 2, in particular the steering input sensors 9, is connected via the data connection 4, respective wires 4, to each of the first and second electric motors 5a,6a, in particular to their controllers 5c,6c. The first actuating arrangement 5 comprises the first electric motor 5a, the first power supply 5b, the first controller 5c and the first hydraulic unit 5d. The second actuating arrangement 6 comprises the second electric motor 6a, the (not depicted) second power supply and the second hydraulic unit 6d. Both hydraulic units 5d, 6d are fluidly connected via hydraulic lines 7 to the steering mechanism, comprising in particular the hydraulic cylinder 8. Further, the second embodiment comprises a GPS-unit 12 being in data connection with a GPS-controller 13 and with the first and the second controller 5c, 6c.

Fig. 3 depicts a third embodiment of the steer by wire system 1 analogous to the first embodiment. The steer by wire system 1 comprises the steering input device 2 having the steering wheel 3. Electrical power is provided to the steering input device 2 via the input power source 11. The steering input device 2 comprises the (not depicted) feed-back module and steering input sensors. Further, the steering input device 2 is in data connection with the first and the second actuating arrangement 5, 6, in particular with their controllers 5c,6c. Each of the steering input sensors 9 is connected to each of the electric motors 5a,6a, respectively their controllers 5c,6c. The first actuating arrangement 5 comprises the electric motor 5a, the first power supply 5b, the first controller 5c and the first hydraulic unit 5d. The second actuating arrangement 6 comprises the second electric motor 6a, the (not depicted) second power supply and the second hydraulic unit 6d. The first and the second hydraulic units 5d,6d are fluidly connected via hydraulic lines 7 to the hydraulic cylinder 8 of the steering mechanics. Furthermore, the second actuating arrangement 6 comprises a transmission unit 6e being provided between the second electric motor 6a and the second hydraulic unit 6d. The transmission unit 6e can be used to increase or decrease torque generated by the second electric motor 6a before it is supplied to the second hydraulic unit 6d.

Depending on the design of the transmission unit 6e, either speed or torque provided by the second electric motor 5a is increased while the respective other is decreased. As a result, a high torque or a high speed is provided to the second hydraulic unit 6c, which provides a respective high pressure or high flow to the hydraulic cylinder 8.

The first, the second and the third embodiment can be combined to form a not depicted fourth embodiment of the steer by wire system 1 having the GPS-unit 12 and the transmission unit 6e.

In all embodiments, the first electric motor 5a is controlled via the first controller 5c. The first electric motor 5a is operatively coupled to the first hydraulic unit 5d. In this way, the first electric motor 5a drives the first hydraulic unit 5d. The first hydraulic unit 5d is fluidly connected to the hydraulic cylinder 8.

The above-described steer by wire systems 1 can be used for example in vehicles, in particular mining vehicles, agricultural vehicles, construction vehicles, heavy forklifts or alike.

Further to the above-described features, the steer by wire system 1 comprises at least one vehicle speed sensor and/or at least one wheel angle sensor. The at least one vehicle speed sensor is configured to provide information of a speed of the vehicle. The at least one wheel angle sensor provides information on an angle of steered wheels relatively to a neutral position, e.g. a position in which the vehicle moves in a straight direction. Depending on the design of the vehicle, a number of steered wheels or alike, a wheel angle sensor can be provided on each steered wheel. The at least one vehicle speed sensor, at least one wheel angle sensor and/or two steering input sensors (9) form a not depicted sensor assembly. This sensor assembly is in data connection with both of the first and the second controllers 5c,6c.

During operation, an operator provides a steering input via the steering wheel 3, or a not depicted joystick, to the steering input device 2. The steering input sensors 9 detect a movement of the steering wheel 3 and provide respective information of the movement to the first and the second controller 5c,6c. Based on the information provided by the steering input sensors 9, the sensor assembly comprising vehicle speed sensors, a condition and/or wheel angle sensors, each of the controllers 5c,6c controls its corresponding electric motor 5a,6a to operate the correspondingly coupled hydraulic unit 5d,6d to provide an appropriate hydraulic flow to the hydraulic cylinder 8.

Alternatively, the vehicle can be controlled by a satellite navigation system unit e.g. a GPS-unit 12. The GPS-unit 12 is configured to use the Global Positioning System, GPS, to automatically steer the vehicle based on its position. To do so, the GPS-unit 12 respectively the GPS-controller 13 provides information to each of the controller 5c,6c of the actuating arrangements 5, 6 such that the actuating arrangements 5, 6 provide a hydraulic flow to actuate the hydraulic cylinder 8. Additionally, satellite navigation systems dan be employed as well.

In a first condition, solely the first actuating arrangement 5 operates to steer the vehicle via the steering mechanics. In a second condition, solely the second actuating arrangement 6 operates to steer the vehicle via the steering mechanics. In a third condition, both, the first and the second actuating arrangement 5, 6 operate the steering mechanics of the vehicle.

The condition used depends for example on a force required to turn the steered wheels to provide a change of the wheel angle. In a standstill, for example, a high steering force is required, while in a moving state of the vehicle, the steering force is lower. In any condition, one of the two actuating arrangements 5, 6 is capable of providing sufficient steering for safely parking the vehicle in case of one actuating arrangement 5, 6 fails.

In the first and the second condition, the respective other actuating arrangement 5, 6 is configured to be a backup for the operating actuating arrangement 5, 6 in case the operating actuating arrangement 6,5 fails.

In the third condition, the fist and the second actuating arrangement 5, 6 work together to provide a hydraulic output to the hydraulic cylinder 8. This allows high steering forces or high flows. Furthermore, a load on the individual actuating arrangement 5, 6 is low, as both actuating arrangements 5, 6 produce the required forces.

A not depicted system-pump provides / pumps a pressurized fluid from a not depicted reservoir to the actuating arrangements 5,6, in particular to the corresponding hydraulic units 5d,6d.

The functionality of an actuating arrangement 5,6 is described below. Each of the hydraulic units 5d,6d comprise a not depicted rotary valve and a rotary meter driven by one common drive shaft by the corresponding electric motor 5a,6a. The rotary valve determines, based on rotation of the drive shaft, in which one of the hydraulic lines 7 the pressurized (steering) fluid should be conducted, and thereby whether the steering cylinder 8 provides a movement of the wheels to a left side or to a right side. The rotary valve simultaneously opens a passage in the other one of the hydraulic lines 7 between the actuating arrangement 5,6 and the reservoir for return of (steering) fluid to the reservoir.

Each actuating arrangement 5,6 may comprise not depicted pressure relief valves and not depicted anti-cavitation valves. The system pump and optionally the actuating arrangement 5,6 could be combined into one single power pack housed in one single housing. In fact, the entire actuating arrangement 5,6 may be combined into one single unit formed by a housing which houses all the actuating arrangement 5,6 components and optionally also a reservoir for the steering fluid.

During normal operating, a steering signal provided by the steering input device 2 indicates a relatively small rotation of the rotary valve and rotary meter. The signal may be generated e.g. based on movement of a joystick or a steering wheel 3 which operates an electrical sensor of the steering input device 2. In fail-operation, the electric motor 5a,6a in particular the corresponding controller 5c,6c receives a signal indicating a relatively large rotation of the rotary valve and rotary meter to operate the rotary meter as a pump 5d,6d. To indicate a shift between the two modes of operation, each actuating arrangement 5,6 may comprise a sensor which is adapted to indicate a failure of the system-pump, e.g. a pressure sensor.

In addition or in alternative, the steer by wire system 1 comprises at least one (not depicted) directional valve and at least one (not depicted) metering pump unit having at two metering pumps 5d,6d each. The metering pumps 5d,6d can be connected hydraulically in parallel, wherein a (not depicted) shut off valve is arranged between the metering pumps 5d,6d. The two metering pumps 5d,6d are connected to a common (not depicted) steering shaft, wherein the common shaft can be actuated by the electric motor 5a,6a. The metering pumps 5d,6d are in fluid connection with the steering cylinder 8.

When the steering shaft is rotated, the directional valve opens a path from the pump connection (connecting the system pump to the actuating arrangement 5,6) to one of the two hydraulic lines 7 and another path from the hydraulic lines 7 to the reservoir. In most cases the directional valve comprises two valve elements in form of concentric cylindrical bodies, usually referred to as spool and sleeve. The rotation of the steering shaft causes a rotation between the shaft and the spool. When the hydraulic fluid (steering fluid) passes through the metering pumps 5d,6d, the metering pumps 5d,6d are driven rotating back sleeve and spool to their neutral position.

During normal operation, the metering pumps are in action and an overall displacement is the sum of metering pumps 5d,6d. In case one of the metering pumps 5d,6d fails, the shut off valve will switch over so that only steering fluid from one metering pump 5d,6d (the remaining active) is lead to the steering cylinder 8 so that the corresponding electric motor 5a,6a is able to build up the required steering pressure due to the lowest displacement of the entire steering unit. In this situation the chambers of the remaining metering pump 5d,6d are all connected to each other across the shut-off valve so that no flow and pressure is built up from this metering pump 5d,6d.

In case the steer by wire system 1 comprises two steering cylinders 8, wherein each of the steering cylinder 8 is connected to one of the actuating arrangements 5,6, each actuating arrangements 5,6 comprises a reaction or by-pass valve to allow a fluidic flow, even if one of the actuating arrangements 5,6 fails. The reaction or by-pass valve is integrated in a spool/sleeve set, wherein the spool/sleeve set is formed of the sleeve and the spool. This allows a connection through the steering unit/measuring motor in a neutral position.

The actuating arrangements 5,6 are OSP-units from Danfoss for example.

In a modification, the steering mechanics provides two hydraulic cylinders e.g. a first steering cylinder and a second steering cylinder. Both of the first hydraulic unit 5d and the second hydraulic unit 6c can be hydraulically coupled to both of the two steering cylinders. If the two steering cylinders are configured to steer the same wheel(s), it can be sufficient to hydraulically couple the first hydraulic unit 5d to the first hydraulic cylinder and to hydraulically couple the second hydraulic unit 6d to the second steering cylinder. Even if one steering cylinder or hydraulic unit 5d, 6d fails the system is still operational, such that the vehicle can be parked in a safe manner.

## Claims

1. Steer by wire system (1) for steering a vehicle with a steering mechanics (8), the steer by wire system (1) having a steering input device (2) and a first actuating arrangement (5), wherein the first actuating arrangement (5) comprises a first electric motor (5a), which is in connection to the steering input device (2), and a first hydraulic unit (5d), which is operatively coupled to the first electric motor (5a), wherein the first hydraulic unit (5d) is configured to be fluidly connected to the steering mechanics (8),
**characterized in that** the steer by wire system (1) comprises a second actuating arrangement (6), wherein the second actuating arrangement (6) comprises a second electric motor (6a), which is in connection to the steering input device (2), and a second hydraulic unit (6d), which is operatively coupled to the second electric motor (6a), wherein the second hydraulic unit (6d) is configured to be fluidly connected to the steering mechanics (8).

2. Steer by wire system (1) according to claim 1, wherein the steer by wire system (1) comprises at least one vehicle speed sensor and/or at least one wheel angle sensor.

3. Steer by wire system (1) according to claim 1 or 2, wherein the steering input device (2) comprises two steering input sensors (9), wherein both steering input sensors (9) are in data connection with the first and second electric motor (5a, 6a).

4. Steer by wire system (1) according to any of claims 1 to 3, wherein the steering input device (2) comprises a feed-back module (10).

5. Steer by wire system (1) according to any of claims 1 to 4, wherein the steering input device (2) is fail-operational.

6. Steer by wire system (1) according to any of claims 1 to 5, wherein each electric motor (5a, 6a) is connected to a respective controller (5c,6c), wherein the controllers (5c,6c) are connected to at least one sensor assembly, in particular to at least one vehicle speed sensor, at least one wheel angle sensor and/or two steering input sensors (9).

7. Steer by wire system (1) according to any of claims 1 to 6, wherein at least one of the first or second actuating arrangements (5,6) comprises a transmission unit (6e) arranged between the respective electric motor (6a) and the corresponding hydraulic unit (6d).

8. Steer by wire system (1) according to any of claims 1 to 7, wherein the second actuating arrangement (6) is a backup for the first actuating arrangement (5).

9. Steer by wire system (1) according to any of claims 1 to 7, wherein the first actuating arrangement (5) is configured to work in a first condition, the second actuating arrangement (6) is configured to work in a second condition and/or the first and the second actuating arrangements (5, 6) are configured to work together in a third condition.

10. Steer by wire system (1) according to any of claims 1 to 9, wherein a satellite navigation system unit (12) is in data connection with the first and the second actuating arrangements (5, 6).

## Amended claims

### Amended claims in accordance with Rule 137(2) EPC.

1. Steer by wire system (1) for steering a vehicle with a steering mechanics (8), the steer by wire system (1) having a steering input device (2) and a first actuating arrangement (5), wherein the first actuating arrangement (5) comprises a first electric motor (5a), which is in connection to the steering input device (2), and a first hydraulic unit (5d), which is operatively coupled to the first electric motor (5a), wherein the first hydraulic unit (5d) is configured to be fluidly connected to the steering mechanics (8),
wherein the steer by wire system (1) comprises a second actuating arrangement (6), wherein the second actuating arrangement (6) comprises a second electric motor (6a), which is in connection to the steering input device (2), and a second hydraulic unit (6d), which is operatively coupled to the second electric motor (6a),
wherein the second hydraulic unit (6d) is configured to be fluidly connected to the steering mechanics (8),
**characterized in that** steer by wire system (1) further comprises a system-pump for providing pressurized fluid from a reservoir to the first actuating arrangement (5) and the second actuating arrangement (6), in particular to the first hydraulic unit (5d) and the second hydraulic unit (6d), and
wherein the first hydraulic unit (5d) is a hydraulic steering unit and comprises a rotary valve and a rotary meter driven by one common drive shaft by the first electric motor (5a) and wherein the second hydraulic unit (6d) is a hydraulic steering unit and comprises a rotary valve and a rotary meter driven by one common drive shaft by the second electric motor (5d).

2. Steer by wire system (1) according to claim 1, wherein the steer by wire system (1) comprises at least one vehicle speed sensor and/or at least one wheel angle sensor.

3. Steer by wire system (1) according to claim 1 or 2, wherein the steering input device (2) comprises two steering input sensors (9), wherein both steering input sensors (9) are in data connection with the first and second electric motor (5a, 6a).

4. Steer by wire system (1) according to any of claims 1 to 3, wherein the steering input device (2) comprises a feed-back module (10).

5. Steer by wire system (1) according to any of claims 1 to 4, wherein the steering input device (2) is fail-operational.

6. Steer by wire system (1) according to any of claims 1 to 5, wherein each electric motor (5a, 6a) is connected to a respective controller (5c,6c), wherein the controllers (5c,6c) are connected to at least one sensor assembly, in particular to at least one vehicle speed sensor, at least one wheel angle sensor and/or two steering input sensors (9).

7. Steer by wire system (1) according to any of claims 1 to 6, wherein at least one of the first or second actuating arrangements (5,6) comprises a transmission unit (6e) arranged between the respective electric motor (6a) and the corresponding hydraulic unit (6d).

8. Steer by wire system (1) according to any of claims 1 to 7, wherein the second actuating arrangement (6) is a backup for the first actuating arrangement (5).

9. Steer by wire system (1) according to any of claims 1 to 7, wherein the first actuating arrangement (5) is configured to work in a first condition, the second actuating arrangement (6) is configured to work in a second condition and/or the first and the second actuating arrangements (5, 6) are configured to work together in a third condition.

10. Steer by wire system (1) according to any of claims 1 to 9, wherein a satellite navigation system unit (12) is in data connection with the first and the second actuating arrangements (5, 6).
